# EUROPEAN PATENT APPLICATION

(11) **EP 2 073 296 A1**
(43) Date of publication of application: **24.06.2009**
(21) Application number: 08022004.9
(22) Date of filing: 18.12.2008
(51) Int. Cl.: H01M 8/04

(54) **Fuel cell system**

(30) Priority: 18.12.2007 JP 2007325368
(71) Applicant: KABUSHIKI KAISHA TOYOTA JIDOSHOKKI, Kariya-shi, Aichi-ken (JP)
(72) Inventor: Yamada, Kazuho, Kariya-shi Aichi-ken (JP); Nakane, Yoshiyuki, Kariya-shi Aichi-ken (JP); Fujii, Toshiro, Kariya-shi Aichi-ken (JP)
(74) Representative: Siegert, Georg

(57) **Abstract**

A fuel cell system which can exhibit a better result of a reduction in size and weight is provided. The fuel cell system of the present invention comprises a stack 1 of fuel cells which generate electricity by receiving a supply of hydrogen gas and air, a fuel supply passage 11 for supplying hydrogen gas to the stack 1, a fuel circulation and supply passage 18 and a fuel circulation and discharge passage 19 equipped with a fuel pump 6 for causing any unreacted hydrogen gas discharged from the stack 1 to join the fuel supply passage 11 and be circulated, a cooling water pump 4 for supplying cooling water to the stack 1, and a regenerator 7 driven by the cooling water supplied from the cooling water pump 4 for generating a rotary force. The hydrogen pump 6 is adapted to be driven for rotation by the regenerator 7.

## Description

### TECHNICAL FIELD OF THE INVENTION

The present invention relates to a fuel cell system.

### BACKGROUND ART

Known fuel cell systems are disclosed in Publication JP-A-2007-184196, JP-A-2006-156283 or JP-A-2007- 200733. These fuel cell systems have a stack of fuel cells which generate electricity by receiving a supply of fuel gas and oxidant gas, a fuel supply passage for supplying fuel gas to the stack, a fuel circulating passage equipped with a fuel pump for causing any unreacted fuel gas discharged from the stack to join the fuel supply passage and be circulated, and an air compressor for supplying oxidant gas to the stack.

These fuel cell systems also have an oxidant gas discharge passage connected downstream of the stack and equipped with a regenerator. The fuel pump is adapted to be driven for rotation by the regenerator.

This type of fuel cell system can realize an improved efficiency, since the unreacted fuel gas discharged from the stack can be recycled to the stack. This type of fuel cell system can also achieve a reduction in size and weight effectively, since the fuel pump does not have to be driven for rotation by any motor, as the regenerator is driven by the oxidant gas discharged from the stack to produce a rotary force and the fuel pump is driven for rotation by the regenerator.

### STATEMENT OF INVENTION

### PROBLEM TO BE SOLVED BY THE INVENTION

However, the known fuel cell system described above has its fuel pump driven for rotation by its regenerator driven by the kinetic energy of the oxidant gas discharged from the stack. As the oxidant gas is a compressible fluid, it is compressed when driving the regenerator and fails to drive the regenerator with a sufficiently large rotary force. This tendency is remarkable, even with a fluctuation in the rotary force of the regenerator, particularly when a pressure valve is installed downstream of the stack to maintain an appropriate oxidant gas pressure in the stack to generate a sufficiently large amount of electricity. Accordingly, the fuel pump cannot be driven in a stable way with a sufficiently large rotary force, the elimination of the motor or its reduction in size cannot be realized, but only an insufficient result of a reduction in size or weight can be achieved.

This problem is likewise encountered by the fuel cell system disclosed in Publication JP-A-60-158559 or JP-B-48-26904 which employs as a force for driving a fuel pump the kinetic energy of the fuel gas in the fuel supply passage. The problem is likewise encountered by the fuel cell system disclosed in Publication JP-A-2003- 217641 which employs the kinetic energy of fuel gas in the fuel supply passage for condensing vapor of exhaust gas discharged from the stack.

The present invention has been made in view of the prior circumstances as stated above, and it is an object thereof to provide a fuel cell system which can exhibit a better result of a reduction in size and weight.

### MEANS FOR SOLVING PROBLEM

The fuel cell system of the present invention is characterized by comprising a stack of fuel cells which generate electricity by receiving a supply of fuel gas and oxidant gas, a fuel supply passage for supplying fuel gas to the stack, a fuel circulating passage equipped with a fuel pump for causing any unreacted fuel gas discharged from the stack to join the fuel supply passage and be circulated, a cooling water pump for supplying cooling water to the stack, and a regenerator driven by the cooling water supplied from the cooling water pump for generating a rotary force, the fuel pump being adapted to be driven for rotation by the regenerator.

As the electrochemical reaction taking place in the stack of the fuel cell system is an exothermic reaction, it is possible to supply cooling water from a cooling water pump to the stack so that the stack may not reach any temperature higher than is required. In the fuel cell system of the present invention, the regenerator is driven by the kinetic energy of cooling water supplied from the cooling water pump and the fuel pump is driven for rotation by the regenerator. As cooling water is an incompressible fluid, it is not compressed when driving the regenerator, but can drive the regenerator with a sufficiently large rotary force. The fuel cell system does not require any control of the pressure of cooling water supplied to the stack, but even though an open-shut valve for controlling its quantity may be installed, the regenerator can be driven with a constantly stable level of kinetic energy by the circulating cooling water. The passage for cooling water in the stack is larger than that for oxidant gas in the stack, so that the kinetic energy of cooling water is not substantially lost. Therefore, the fuel pump can be driven in a stable way with a sufficiently large rotary force, thereby enabling the elimination of the motor or a reduction in size thereof.

Therefore, the fuel cell system of the present invention can exhibit a better result of a reduction in size and weight.

The fuel cell system has the following advantages over any ordinary fuel cell system having a fuel pump driven for rotation by a motor:
(1) While the fuel pump is driven for rotation by the regenerator alone, the regenerator which can realize that torque is smaller than a motor. Therefore, the fuel cell system can be reduced in size and weight.
(2) Fuel gas is hardly heated. The motor reaches a temperature as high as about 150°C. It is considered desirable to cool the stack to about 80°C, and the unreacted fuel gas discharged from the stack reaches the same level of temperature. If the unreacted fuel gas discharged from the stack is heated by the motor, an increased flow of cooling water is required for lowering the temperature of the stack and brings about a power loss. This power loss can be reduced if the fuel pump is driven for rotation by the regenerator.
(3) The material for the piping for distributing fuel gas can be selected from a wider range of materials. As the temperature of fuel gas hardly becomes higher, it is possible to select piping made of a material of low heat resistance, such as resin piping.
(4) Although hydrogen gas employed widely as fuel gas has a low molecular weight and is likely to leak out through a seal applied to a joint of piping, it is safe and permits low insulation, since no electricity is used for rotating the fuel pump.
(5) Generally, the stack has a potential of 450 V and the motor for rotating the fuel pump is driven at about 200 V. If the fuel pump is driven by the regenerator, it is possible to avoid any corrosion of the fuel pump caused by the potential difference. If the fuel pump is driven for rotation by the regenerator, the necessity of maintaining the stack and the fuel pump in a highly insulated state is reduced, as any radio noise made by the potential difference can be prevented.
(6) The regenerator responds quickly to the control of the cooling water pump, since the regenerator is connected to the cooling water pump by cooling water which is an incompressible fluid.
(7) While the flow rate at which fuel gas is recycled depends on the output of cooling water pump, the flow rates required of fuel gas and cooling water are substantially synchronized and the amounts of fuel gas and cooling water can be controlled together in a unified way in accordance with a variation of the output required, thereby calling for only a simple control apparatus.

In the fuel cell system of the present invention, the stack and the regenerator can be installed in parallel to the cooling water pump. A water supply passage to which cooling water as discharged by the cooling water pump is supplied, and a drain passage for discharging cooling water downstream can be connected to the stack. A regenerative water supply passage to which cooling water as discharged by the cooling water pump is supplied, and a regenerative drain passage for discharging cooling water downstream can be connected to the regenerator. The cooling water leaving the drain passage and the regenerative drain passage can be recycled to the cooling water pump.

The amount of flow through the cooling water pump is equal to the total of the amount of flow required for cooling the stack and the amount of flow required for driving the fuel pump. Accordingly, the fuel cell system is easy to control. As the cooling water discharged from the cooling water pump is supplied to the regenerator without flowing through the stack, the regenerator is not heated, so that the fuel gas in the fuel pump is not heated. Accordingly, any increase in the flow of cooling water for lowering the stack temperature is unnecessary and it is possible to reduce the loss of power. The stack and regenerator which are in parallel to the cooling water pump make it possible to reduce any loss of pressure through the fuel cell system as a whole and set a lower discharge pressure for the cooling water pump, as compared with when the stack and the regenerator are placed in series to the cooling water pump.

The water supply passage and the regenerative water supply passage may both be diverged from the cooling water pump, or only the water supply or regenerative water supply passage may be connected to the cooling water pump, while the regenerative water supply passage is diverged from the water supply passage, or the water supply passage from the regenerative water supply passage. The drain passage and the regenerative drain passage may both join the cooling water pump, or only the drain passage or regenerative drain passage may be connected to the cooling water pump, while the regenerative drain passage joins the drain passage, or the drain passage joins the regenerative drain passage.

Cooling water is preferably supplied to the water supply passage and the regenerative water supply passage through an open-shut valve. The open-shut valve is preferably a three-way valve. The open-shut valve can have its degree of opening selected to alter the ratio of the amount of cooling water supplied to the stack and the amount of cooling water supplied to the regenerator. Accordingly, it is possible to regulate the output of the regenerator as desired and it is possible to control the fuel cell system in a more desirable way. When scavenging is done in the event of flooding, for example, a large amount of cooling water not passing through the stack can be supplied to the regenerator to drive the fuel pump at a high rotating speed to thereby finish scavenging still more quickly.

In the fuel cell system of the present invention, the stack and the regenerator can be installed in series to the cooling water pump so that the regenerator may be positioned upstream. A regenerative water supply passage to which cooling water as discharged by the cooling water pump is supplied, and a regenerative drain passage for discharging cooling water downstream can be connected to the regenerator. A water supply passage to which cooling water discharged from the regenerative drain passage is supplied, and a drain passage for discharging cooling water downstream can be connected to the stack. The cooling water leaving the drain passage can be recycled to the cooling water pump.

In that case, the cooling water pump, regenerator and stack are connected in series to one another. The connection of the cooling water pump, regenerator and stack in series makes it possible to reduce the output flow of the cooling water pump, reduce the volume of the cooling water pump and thereby realize a reduction in size of the fuel cell system, as compared with when the stack and the regenerator are placed in parallel to the cooling water pump. As the cooling water discharged from the cooling water pump is supplied to the regenerator without flowing through the stack, the regenerator is not heated, so that the fuel gas in the fuel pump is not heated. Accordingly, any increase in the flow of cooling water for lowering the stack temperature is unnecessary and it is possible to reduce the loss of power. In this case, the water supply passage can be used as the regenerative water supply passage and regenerative drain passages, too. When the water supply passage serves as the regenerative water supply passage and regenerative drain passages, too, the regenerator can be driven directly by the cooling water discharged from the cooling water pump, thereby enabling a simplified piping arrangement and a reduction in the cost of manufacture.

It is preferable for a bypass passage to connect the regenerative water supply passage and regenerative drain passages without the intermediary of the regenerator, and to be supplied with cooling water through an open-shut valve. In this case, the fuel cell system can be controlled in a more desirable way, since the open-shut valve can have its degree of opening selected to alter the amount of cooling water supplied to the regenerator.

In the fuel cell system of the present invention, the stack and the regenerator can be installed in series to the cooling water pump so that the stack may be positioned upstream. A water supply passage to which cooling water as discharged by the cooling water pump is supplied, and a drain passage for discharging cooling water downstream can be connected to the stack. A regenerative water supply passage to which cooling water discharged from the drain passage is supplied, and a regenerative drain passage for discharging cooling water downstream can be connected to the regenerator. The cooling water leaving the regenerative drain passage can be recycled to the cooling water pump.

In that case, the cooling water pump, regenerator and stack are connected in series to one another. The connection of the cooling water pump, regenerator and stack in series makes it possible to reduce the output flow of the cooling water pump, reduce the volume of the cooling water pump and thereby realize a reduction in size of the fuel cell system, as compared with when the stack and the regenerator are placed in parallel to the cooling water pump. In that case, moreover, the water drain passage can be used as the regenerative water supply passage and regenerative drain passages, too. When the water drain passage serves as the regenerative water supply passage and regenerative drain passages, too, cooling water gains a high temperature and a low viscous resistance, since cooling water is supplied to the regenerator through the stack. This enables a reduction in the consumption of power by the regenerator.

It is preferable for a bypass passage to connect the regenerative water supply passage and regenerative drain passages instead of their connection via the regenerator, and to be supplied with cooling water through an open-shut valve. In this case, the fuel cell system can be controlled in a more desirable way, since the open-shut valve can have its degree of opening selected to alter the amount of cooling water supplied to the stack.

In the fuel cell system of the present invention, it is preferable for the fuel pump and the regenerator to form a single unit. This makes it possible to simplify the construction of the fuel cell system and realize a reduction in the cost of its manufacture.

It is also preferable for the stack to adjoin the fuel pump and the regenerator. This is beneficial for preventing the fuel pump and the regenerator from being frozen, since the stack has a high heat capacity. It is also possible to simplify the construction of the fuel cell system and realize a reduction in the cost of its manufacture, while reducing the flow resistance of fuel gas, since the stack can be supplied with fuel gas at a short distance and can be discharged with fuel gas at a short distance, too.

A motor can be connected to the regenerator. The motor can assist the regenerator in the event that the regenerator has difficulty in driving the fuel pump when cooling water has a high viscous resistance due to freezing or a low temperature.

In the fuel cell system of the present invention, it is also possible to include other passages for supplying cooling water to a fuel tank, etc.

### DESCRIPTION OF DRAWINGS

FIG. 1 is a schematic diagram showing a fuel cell system according to Embodiment 1 in top plan.

FIG. 2 is a schematic diagram showing the fuel cell system according to Embodiment 1 in elevation.

FIG. 3 is a schematic diagram showing a fuel cell system according to Embodiment 2 in top plan.

FIG. 4 is a schematic diagram showing a fuel cell system according to Embodiment 3 in top plan.

FIG. 5 is a schematic diagram showing the fuel cell system according to Embodiment 3 in elevation.

FIG. 6 is a schematic diagram showing a fuel cell system according to Embodiment 4 in top plan.

FIG. 7 is a schematic diagram showing the fuel cell system according to Embodiment 4 in elevation.

FIG. 8 is a schematic diagram showing a fuel cell system according to Embodiment 5 in top plan.

FIG. 9 is a schematic diagram showing a fuel cell system according to Embodiment 6 in top plan.

### DESCRIPTION OF SPECIFIC EMBODIMENTS

Embodiments 1 to 6 in which the present invention is carried out specifically will now be described with reference to the drawings.

### EMBODIMENT 1

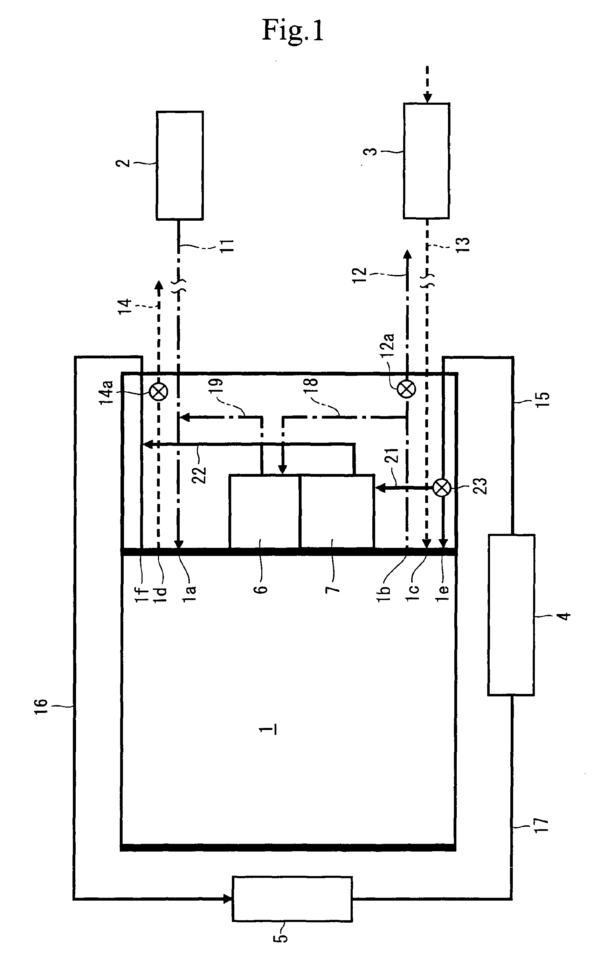

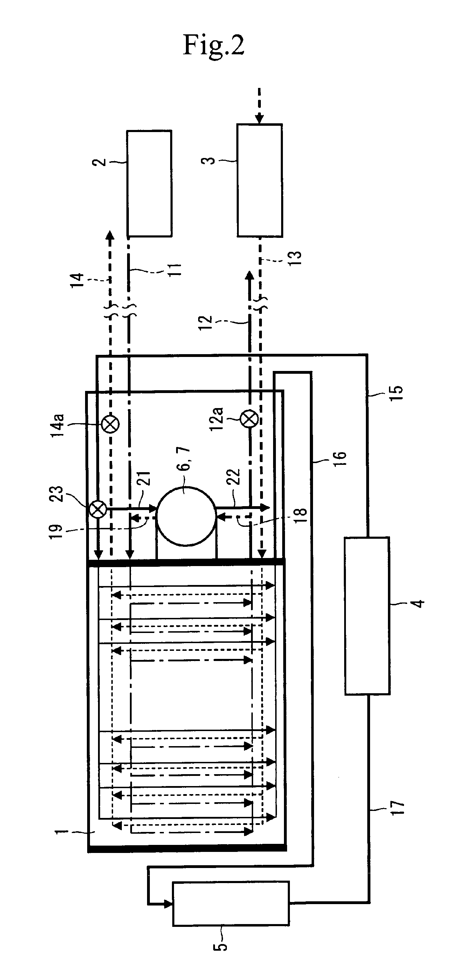

The fuel cell system according to Embodiment 1 has a stack 1, a hydrogen tank 2 as a fuel tank, an air compressor 3 and a cooling water pump 4, as shown in FIGS. 1 and 2.

The stack 1 is a stack of a plurality of fuel cells put together in a housing. Each fuel cell has a solid polymer electrolyte membrane held between an anode and a cathode. The housing for the stack 1 has a hydrogen supply port 1a through which hydrogen gas is supplied as fuel gas, a hydrogen discharge port 1b through which any unreacted hydrogen gas is discharged, an air supply port 1c through which air is supplied as oxidant gas, an air discharge port 1d through which any unreacted air is discharged, a cooling water supply port 1e through which cooling water is supplied, and a cooling water discharge port 1f through which cooling water is discharged. The hydrogen supply port 1a and the hydrogen discharge port 1b are connected to all the anodes of all the fuel cells through a passage formed in the housing. The air supply port 1c and the air discharge port 1d are connected to all the cathodes of the all the fuel cells through a passage formed in the housing. The cooling water port 1e and the cooling water discharge port 1f are connected to each other through a passage formed in the housing.

The hydrogen tank 2 stores high-pressure hydrogen gas. The hydrogen supply port 1a of the stack 1 and the hydrogen tank 2 are connected to each other by a fuel supply passage 11 and a fuel discharge passage 12 is connected to the hydrogen discharge port 1b downstream of the stack 1.

The air compressor 3 compresses air from the atmosphere and supplies it. The air supply port 1c of the stack 1 and the discharge port of the air compressor 3 are connected to each other by an air supply passage 13 and an air discharge passage 14 is connected to the air discharge port 1d downstream of the stack 1. A pressure valve 14a is installed in the air discharge passage 14 for maintaining a proper air pressure in the stack 1.

The cooling water pump 4 supplies cooling water to the stack 1 to prevent the stack 1 from reaching any unnecessarily high temperature, in view of the fact that the electrochemical reaction taking place in the stack 1 is an exothermic reaction. The cooling water supply port 1e of the stack 1 and the discharge port of the cooling water pump 4 are connected to each other by a water supply passage 15 and a drain passage 16 is connected to the cooling water discharge port downstream of the stack 1. The drain passage 16 is connected to a radiator 5 and the radiator 5 is connected to the intake port of the cooling water pump 4 by a drain passage 17.

The fuel cell system also has a hydrogen pump 6 as a fuel pump and a regenerator 7. The stack 1 and the regenerator 7 are installed in parallel to the cooling water pump 4. The hydrogen pump 6 and the regenerator 7 are integrally held on the housing for the stack 1.

The hydrogen pump 6 is used for circulating any unreacted hydrogen gas discharged from the stack 1. A fuel circulation and supply passage 18 diverged from the fuel discharge passage 12 is connected to the intake port of the hydrogen pump 6 and a fuel circulation and discharge passage 19 connected to the fuel supply passage 11 is connected to the discharge port of the hydrogen pump 6. The fuel circulation and supply passage 18 and the fuel circulation and discharge passage 19 form a fuel circulation passage. An open-shut valve 12a is installed in the fuel discharge passage 12 downstream of the fuel circulation and supply passage 18.

The regenerator 7 is, as it were, a hydraulic motor and has its turbine rotated by cooling water. The turbine of the regenerator 7 is coupled to the drive shaft of the hydrogen pump 6 in a tandem fashion. A regenerative water supply passage 21 diverged from the water supply passage 15 is connected to the intake port of the regenerator 7 and a regenerative drain passage 22 connected to the drain passage 16 is connected to the discharge port of the regenerator 7. Cooling water is supplied to the water supply passage 15 and the regenerative water supply passage 21 through an open-shut valve 23 which comprises a three-way valve.

In the fuel cell system under description, the regenerator 7 is driven by the kinetic energy of cooling water if cooling water supplied by the cooling water pump 4 is directed from the water supply passage 15 to the regenerative water supply passage 21 by adjusting the opening of the open-shut valve 23. Accordingly, the hydrogen pump 6 is driven for rotation by the regenerator 7. As cooling water is an incompressible fluid, it is not compressed when driving the regenerator 7, but can drive the regenerator 7 with a sufficiently large rotary force. The kinetic energy of cooling water is not substantially lost, since the passage for cooling water in the stack 1 is larger than that for oxidant gas in the stack 1. Accordingly, the hydrogen pump 6 can be driven in a stable way with a sufficiently large rotary force. Therefore, the fuel cell system does not have any motor for driving the hydrogen pump 6.

In the fuel cell system under description, the amount of flow through the cooling water pump 4 is equal to the total of the amount of flow required for cooling the stack 1 and the amount of flow required for driving the hydrogen pump 6, since the stack 1 and the regenerator 7 are installed in parallel to the cooling water pump 4. Accordingly, the fuel cell system is easy to control. As the cooling water discharged from the cooling water pump 4 is supplied to the regenerator 7 without flowing through the stack 1, the regenerator 7 is not heated, so that the hydrogen gas in the hydrogen pump 6 is not heated. Accordingly, any increase in the flow of cooling water for lowering the temperature of the stack 1 is unnecessary and it is possible to reduce the loss of power. The stack 1 and the regenerator 7 which are in parallel to the cooling water pump 4 make it possible to reduce any loss of pressure through the fuel cell system as a whole and set a lower discharge pressure for the cooling water pump 4.

In the fuel cell system under description, cooling water is supplied to the water supply passage 15 and the regenerative water supply passage 21 through the open-shut valve 23. The open-shut valve 23 can have its degree of opening selected to alter the ratio of the amount of cooling water supplied to the stack 1 and the amount of cooling water supplied to the regenerator 7. In other words, it is possible to supply any desired amount of flow to the regenerator 7 by altering the amount of discharge by the cooling water pump 4 and the opening of the open-shut valve 23 appropriately. Accordingly, it is possible to regulate the output of the regenerator 7 as desired and it is possible to control the fuel cell system in a more desirable way. When scavenging is done in the event of flooding, for example, a large amount of cooling water not passing through the stack 1 can be supplied to the regenerator 7 to drive the hydrogen pump 6 at a high rotating speed to thereby finish scavenging still more quickly.

In the fuel cell system under description, it is possible to simplify the construction of the cooling water pump 4 itself and realize a reduction in the cost of its manufacture, since the regenerative water supply passage 21 is diverged from the water supply passage 15. As the hydrogen pump 6 and the regenerator 7 form a single unit, it is possible to simplify the construction of the fuel cell system and realize a reduction in the cost of its manufacture.

In the fuel cell system under description, moreover, the stack 1 adjoins the hydrogen pump 6 and the regenerator 7. This is beneficial for preventing the hydrogen pump 6 and the regenerator 7 from being frozen, since the stack 1 accumulates a large amount of heat. It is also possible to simplify the construction of the fuel cell system and realize a reduction in the cost of its manufacture, while reducing the flow resistance of hydrogen gas, since the stack 1 can be supplied with hydrogen gas at a short distance and can be discharged with hydrogen gas at a short distance, too.

In the fuel cell system under description, circulating cooling water can rotate the regenerator 7 with a constantly stable level of kinetic energy, though the open-shut valve may be installed for controlling the amount of cooling water supplied to the stack 1.

Therefore, the fuel cell system under description can exhibit a better result of a reduction in size and weight. The fuel cell system also has the foregoing advantages over any ordinary fuel cell system having a hydrogen pump 6 driven for rotation by a motor.

### EMBODIMENT 2

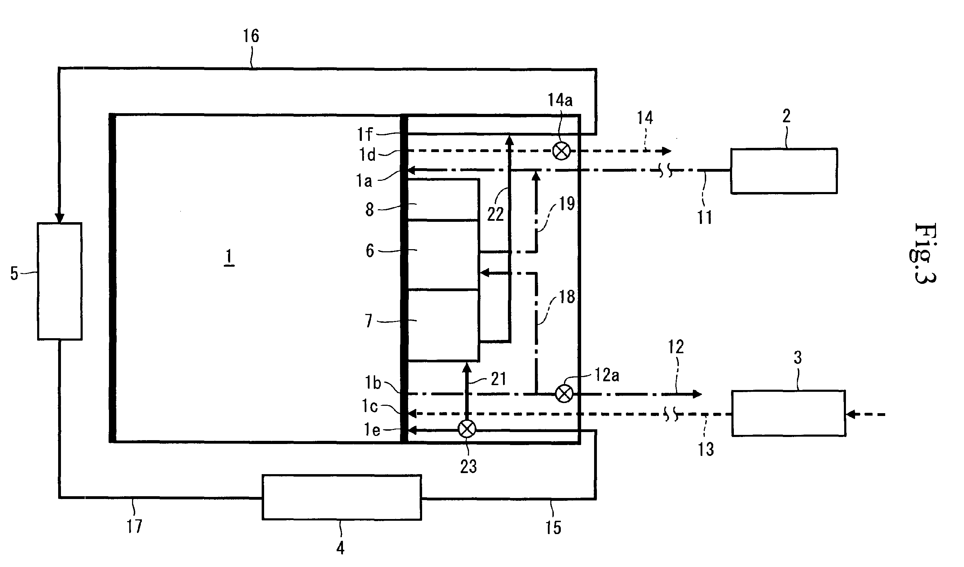

The fuel cell system according to Embodiment 2 has a small motor 8, as shown in FIG. 3. The motor 8 is integrally held in the housing for the stack 1 with the hydrogen pump 6 and the regenerator 7. The rotary shaft of the motor 8 is coupled to the turbine of the regenerator 7 and the drive shaft of the hydrogen pump 6 in a tandem fashion. In any other aspect of construction, it is identical to the fuel cell system according to Embodiment 1.

As the motor 8 is connected to the regenerator 7 in the fuel cell system under description, the motor 8 can assist the regenerator 7 in the event that the regenerator 7 has difficulty in driving the hydrogen pump 6 when cooling water has a high viscous resistance due to freezing or a low temperature.

In the fuel cell system under description, it is possible to drive the hydrogen pump 6 together with the regenerator 7 or independently of the regenerator 7 by installing an electromagnetic clutch between the rotary shaft of the motor 8 and the turbine of the regenerator 7 or between the turbine of the regenerator 7 and the drive shaft of the hydrogen pump 6. As the motor 8 is not constantly in operation, there is no demerit arising from the constant operation of the motor 8. In any other aspect of operation or advantage, the system is identical to Embodiment 1.

### EMBODIMENT 3

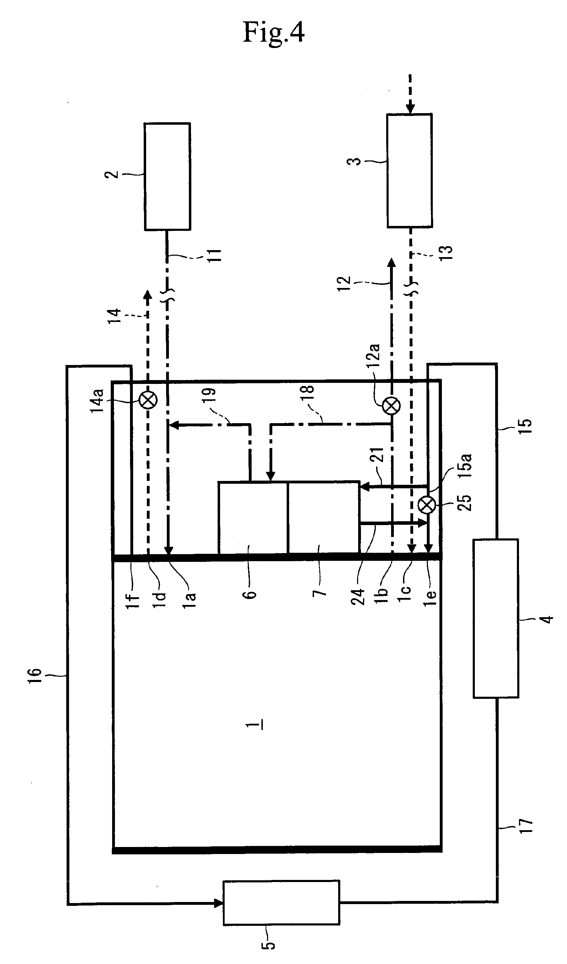

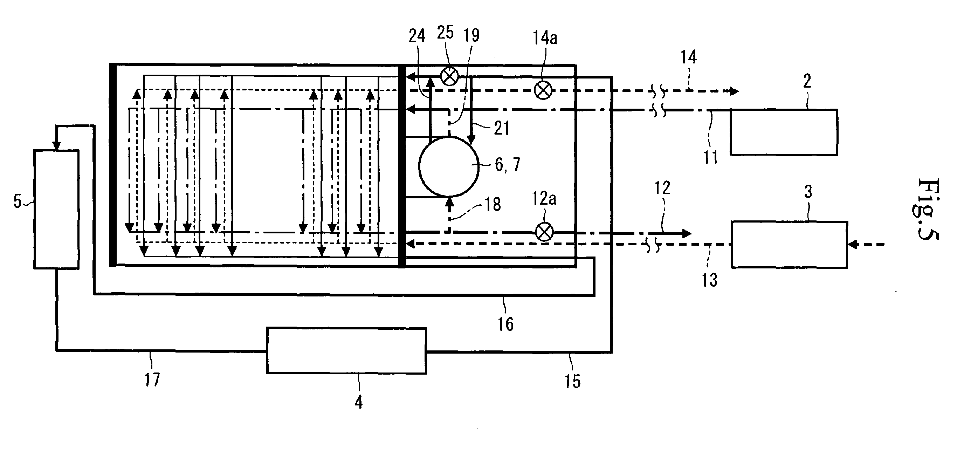

The fuell cell system according to Embodiment 3 has a stack 1 and a regenerator 7 installed in series to a cooling water pump 4 so that the regenerator 7 may be positioned upstream, as shown in FIGS. 4 and 5.

A regenerative water supply passage 21 diverged from a water supply passage 15 is connected to the intake port of the regenerator 7 and a regenerative drain passage 24 connected to the water supply passage 15 is connected to the discharge port of the regenerator 7. The water supply passage 15 downstream of the regenerative water supply passage 21 and upstream of the regenerative drain passage 24 forms a bypass passage 15a connecting the regenerative water supply passage and drain passages 21 and 24 without passing through the regenerator 7. The bypass passage 15a has an open-shut valve 25. In any other aspect of construction, the system is identical to the fuel cell system according to Embodiment 1.

According to the fuel cell system under description, the regenerator 7 can be driven directly by the cooling water discharged from the cooling water pump 4, thereby enabling a simplified piping arrangement and a reduction in the cost of manufacture. As the cooling water pump 4, the regenerator 7 and the stack 1 are connected in series to one another, the fuel cell system under description can reduce the output flow of the cooling water pump 4, reduce the volume of the cooling water pump 4 and thereby realize a reduction in size of the fuel cell system, as compared with the fuel cell system according to Embodiment 1 or 2 in which the stack 1 and the regenerator 7 are placed in parallel to the cooling water pump 4.

The fuel cell system under description can be controlled in a more desirable way, since the open-shut valve 25 can have its degree of opening selected to alter the amount of cooling water supplied to the regenerator 7. In any other aspect of operational advantage, it is identical to Embodiment 1. The fuel cell system according to Embodiment 3 may further include a motor 8 as according to Embodiment 2.

### EMBODIMENT 4

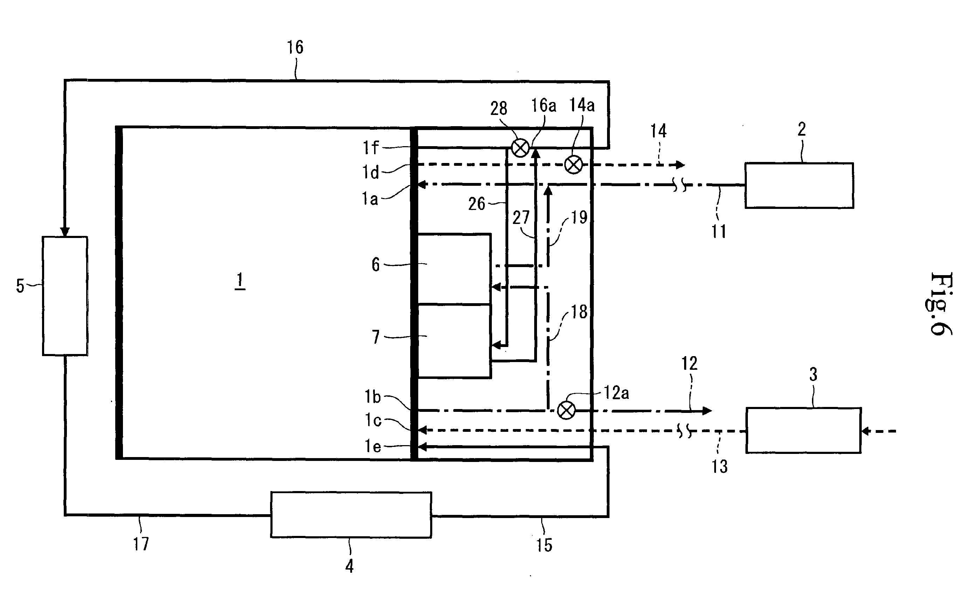

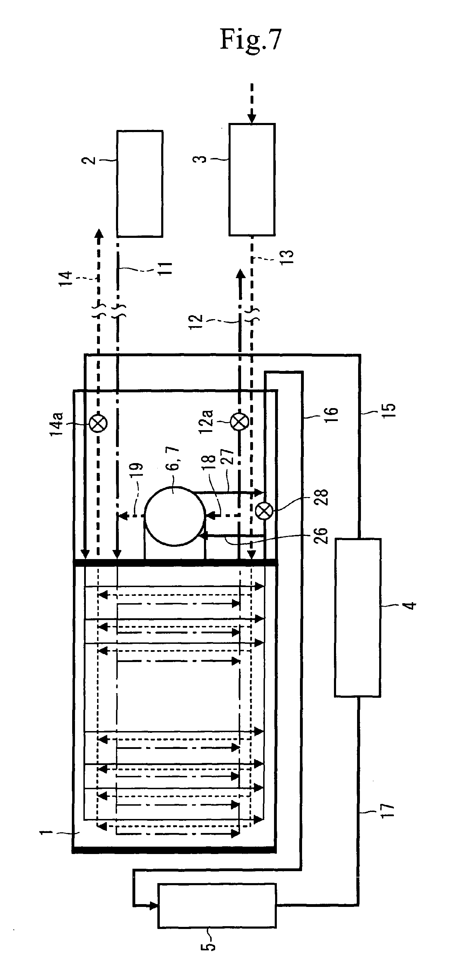

In the fuel cell system according to Embodiment 4, a regenerative water supply passage 26 diverged from a drain passage 16 is connected to the intake port of a regenerator 7 and a regenerative drain passage 27 connected to the drain passage 16 is connected to the discharge port of the regenerator 7, as shown in FIGS. 6 and 7. The drain passage 16 downstream of the regenerative water supply passage 26 and upstream of the regenerative drain passage 27 forms a bypass passage 16a connecting the regenerative water supply passage and drain passages 26 and 27 without passing through the regenerator 7. The bypass passage 16a has an open-shut valve 28. The open-shut valve 28 may be a three-way valve connected to the drain passage 16 and the regenerative water supply passage 27. In any other aspect of construction, the system is identical to the fuel cell system according to Embodiment 1.

The fuel cell system under description may present operational advantages equal to those of Embodiment 3. The fuel cell system according to Embodiment 4 may further include a motor 8 as according to Embodiment 2.

### EMBODIMENT 5

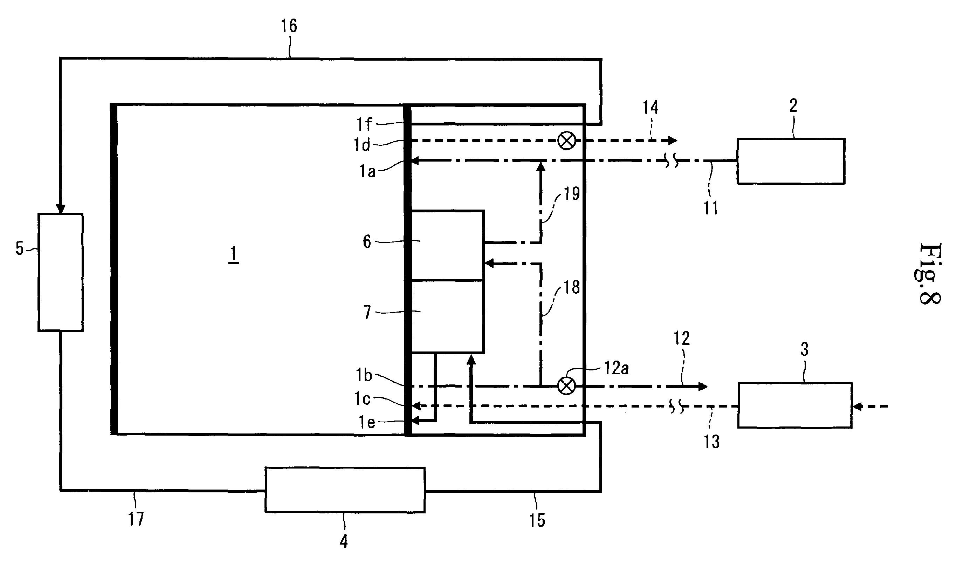

In the fuel cell system according to Embodiment 5, a regenerator 7 is installed in a water supply passage 15 and a cooling water pump 4, the regenerator 7 and a stack 1 are connected in series to one another, as shown in FIG. 8. The water supply passage 15 serves as a regenerative water supply passage and a regenerative drain passage, too. In any other aspect of construction, the system is identical to the fuel cell system according to Embodiment 1.

According to the fuel cell system under description, the regenerator 7 is not heated, so that the hydrogen gas in the hydrogen pump 2 is not heated, as the cooling water discharged from the cooling water pump 4 is supplied to the regenerator 7 without flowing through the stack 1. Accordingly, any increase in the flow of cooling water for lowering the temperature of the stack 1 is unnecessary and it is possible to reduce the loss of power. According to the fuel cell system under description, the regenerator 7 can be driven directly by the cooling water discharged from the cooling water pump 4, thereby enabling a simplified piping arrangement and a reduction in the cost of manufacture, as the cooling water pump 4, the regenerator 7 and the stack 1 are connected in series to one another by the water supply passage 15. In any other aspect of operational advantage, the system is identical to Embodiment 1. The fuel cell system according to Embodiment 5 may further include a motor 8 as according to Embodiment 2.

### EMBODIMENT 6

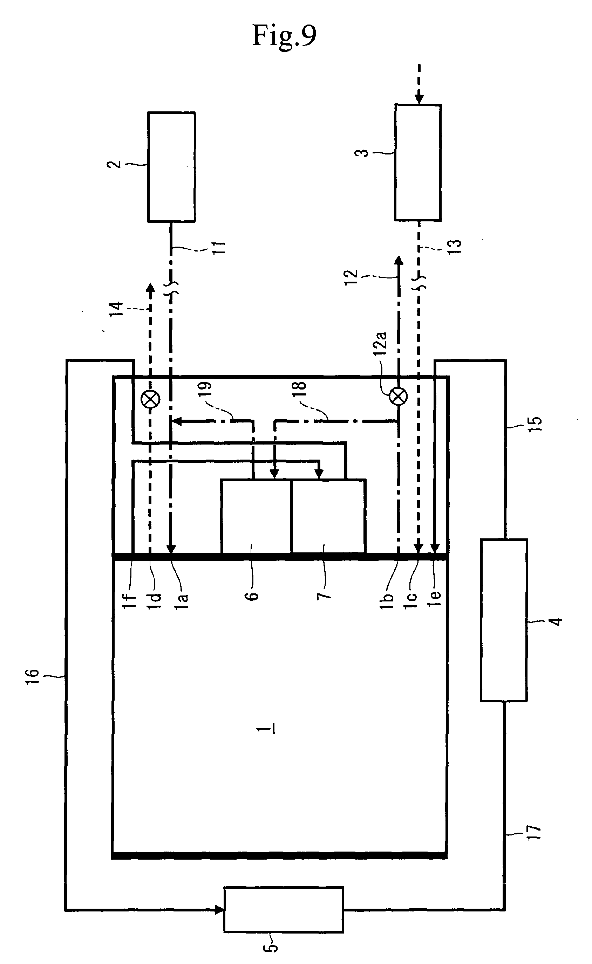

In the fuel cell system according to Embodiment 6, a regenerator 7 is installed in a drain passage 16 and a cooling water pump 4, a stack 1 and the regenerator 7 are connected in series to one another, as shown in FIG. 9. The drain passage 16 serves as a regenerative water supply passage and a regenerative drain passage, too. In any other aspect of construction, the system is identical to the fuel cell system according to Embodiment 1.

In the fuel cell system under description, the regenerator 7 can be heated, since cooling water is supplied to the regenerator 7 through the stack 1. This makes it possible to reduce the consumption of power by the regenerator 7. According to the fuel cell system under description, the regenerator 7 can be driven directly by the cooling water discharged from the stack 1, thereby enabling a simplified piping arrangement and a reduction in the cost of manufacture, as the stack 1, the regenerator 7 and the cooling water pump 4 are connected in series to one another by the drain passage 16. In any other aspect of operational advantage, the system is identical to Embodiment 1. The fuel cell system according to Embodiment 6 may further include a motor 8 as according to Embodiment 2.

Although the present invention has been described by reference to Embodiments 1 to 6, it is needless to say that the present invention is not limited to Embodiments 1 to 6, but that modifications or variations may be made without departing from the scope and spirit thereof.

For example, the regenerator is, as it were, a hydraulic motor and may be of any type that can usually be adopted as a hydraulic motor. It is also possible to install in the water supply or drain passage any other auxiliary machine that necessitates cooling, if required.

### EXPLANATION OF INDUSTRIAL APPLICATION OF INVENTION

The present invention can be utilized for a power unit for a vehicle, or the like.

## Claims

1. A fuel cell system comprising:
a stack of fuel cells which generate electricity by receiving a supply of fuel gas and oxidant gas,
a fuel supply passage for supplying fuel gas to the stack,
a fuel circulating passage equipped with a fuel pump for causing any unreacted fuel gas discharged from the stack to join the fuel supply passage and be circulated,
a cooling water pump for supplying cooling water to the stack, and
a regenerator driven by the cooling water supplied from the cooling water pump for generating a rotary force,
**characterized in that** the fuel pump being adapted to be driven for rotation by the regenerator.

2. The fuel cell system according to claim 1, wherein the stack and the regenerator are installed in parallel to the cooling water pump, a water supply passage to which cooling water as discharged by the cooling water pump is supplied, and a drain passage for discharging cooling water downstream are connected to the stack, a regenerative water supply passage to which cooling water as discharged by the cooling water pump is supplied, and a regenerative drain passage for discharging cooling water downstream are connected to the regenerator, the cooling water leaving the drain passage and the regenerative drain passage are recycled to the cooling water pump.

3. The fuel cell system according to claim 2, wherein the cooling water is supplied to the water supply passage and the regenerative water supply passage through an open-shut valve.

4. The fuel cell system according to claim 1, wherein the stack and the regenerator are installed in series to the cooling water pump so that the regenerator may be positioned upstream, a regenerative water supply passage to which cooling water as discharged by the cooling water pump is supplied, and a regenerative drain passage for discharging cooling water downstream are connected to the regenerator, a water supply passage to which cooling water discharged from the regenerative drain passage is supplied, and a drain passage for discharging cooling water downstream are connected to the stack, the cooling water leaving the drain passage is recycled to the cooling water pump.

5. The fuel cell system according to claim 4, wherein a bypass passage connects the regenerative water supply passage and regenerative drain passages without the intermediary of the regenerator, and is supplied with cooling water through an open-shut valve.

6. The fuel cell system according to claim 1, wherein the stack and the regenerator are installed in series to the cooling water pump so that the stack may be positioned upstream, a water supply passage to which cooling water as discharged by the cooling water pump is supplied, and a drain passage for discharging cooling water downstream are connected to the stack, a regenerative water supply passage to which cooling water discharged from the drain passage is supplied, and a regenerative drain passage for discharging cooling water downstream are connected to the regenerator, and the cooling water leaving the regenerative drain passage is recycled to the cooling water pump.

7. The fuel cell system according to claim 6, wherein a bypass passage connects the regenerative water supply passage and regenerative drain passages without the intermediary of the regenerator, and is supplied with cooling water through an open-shut valve.

8. The fuel cell system according to claim 1, wherein the fuel pump and the regenerator form a single unit.

9. The fuel cell system according to claim 8, wherein the stack adjoins the fuel pump and the regenerator.

10. The fuel cell system according to claim 1, wherein a motor is connected to the regenerator.
